# EUROPEAN PATENT SPECIFICATION

(11) **EP 2 432 358 B1**
(45) Date of publication and mention of the grant of the patent: **19.06.2019**
(21) Application number: 10777306.1
(22) Date of filing: 23.03.2010
(51) Int. Cl.: A47K 11/02, A47K 11/00, C02F 11/12

(54) **METHOD AND DEVICE FOR TREATMENT OF HUMAN EXCREMENT**
VERFAHREN UND VORRICHTUNG ZUR VERARBEITUNG MENSCHLICHER EXKREMENTE
PROCÉDÉ ET DISPOSITIF POUR LE TRAÎTEMENT D'EXCRÉMENTS HUMAINS

(30) Priority: 20.05.2009 GB 0908640
(43) Date of publication of application: 28.03.2012
(73) Proprietor: Lam, Derek, Hong Kong (CN); Chan, Lai Yan, North Point, Hong Kong (CN)
(72) Inventor: Lam, Derek, Hong Kong (CN); Chan, Lai Yan, North Point, Hong Kong (CN)
(74) Representative: HGF Limited
(86) International application number: PCT/CN2010/071204
(87) International publication number: WO 2010/133102

(56) References cited:
- WO-A1-2007/139274
- CN-U- 2 049 241
- CN-Y- 2 730 301
- JP-A- 2001 128 886
- US-A- 3 921 228
- US-A- 5 991 931
- US-A- 6 081 940
- US-B2- 6 601 243

## Description

### FIELD OF THE INVENTION

The present invention relates to a method and a device for treatment of human excrement by collecting and dehydrating the excrement as expelled from human body and more particularly to a method and a device for treatment of human excrement through collection and dehydration of primary excrement as expelled from human body without polluting the environment.

### BACKGROUND OF THE INVENTION

In many areas where waterborne system is not available, people usually collect excrement in a container as it is expelled from the human body. The excrement is usually piled up with straw for undergoing anaerobic degradation. Such a heap sends forth a foul smell which pollutes the environment. US3921228A describes a decomposition toilet that includes a heating means. This document is considered as the closest prior art.

There are also a number of previously known biological toilets to improve the above situation. However, these biological toilets are not satisfying in terms of dehydration efficiency and maintenance point of view because excrement stains the passageway causing unpleasant feeling to next user and excrement forms a high pile getting difficult to be dehydrated particularly in the center portion and new excrement hinders dehydration process. The present invention is a need for an improved method and a device to overcome the shortcomings of the prior art.

### OBJECTS OF THE INVENTION

It is an aim of present invention to provide a method for treatment of human excrement by collecting and dehydrating the excrement expelled from human body.

Another aim of present invention is to provide a device for treatment of human excrement by collecting and dehydrating the excrement expelled from human body.

### SUMMARY OF THE INVENTION

To achieve the aforementioned aims, one aspect of the present invention provides a method for treatment of human excrement, according to the features of independent claim 1. Said method comprises, among others, the step of providing a chamber having a top opening through which excrement enters the chamber;
The method also comprises the step of allowing the excrement to form a layer inside the chamber by setting up a storing porous plate crossing the whole length and whole width of an upper half of the interior of the chamber, wherein the upper part of said plate features to have a protrusion in the form of an equilateral-triangular base pyramid topped vertically under the centre of the outlet of the top opening and the lower side of equilateral-triangular base intersected perpendicularly to the central line of plate, and the plate further slopes downwardly and then horizontally away from top opening in the form of a series of corrugations whereby the excrement moves down the pyramid and the slope and then across the plate by gravity;
The method further comprises the step of allowing liquid urine to fall down into the urine storing region of the chamber through perforations in the porous plate;
The method also further comprises the step of setting up two solid excrement storing regions namely a front storing region located under the top opening and a rear storing region located away from the top opening, and the regions are separated by mounting a vertical baffle on top of said corrugated plate, whereby solid excrement is stored firstly at the front storing region and secondly at the rear storing region;
The method still further comprises the step of dehydrating the solid excrement by ventilating the chamber interior by means of a ventilation system located at the top ceiling region of the front storing region which draws air in through the end wall of the rear storing region, down through the porous plate into the urine storing region and backup through the porous plate before exiting out through the ventilation system;
The method can also comprise the step of providing an indirect heat source inside chamber wherein heat penetrates the solid excrement layers without touching.

Another aspect of the present invention provides a device for treatment of human excrement according to independent claim 3. This device comprises a chamber having a top opening through which excrement enters chamber;
According to one embodiment of the present invention, said top opening is defined by a bowl having an upwardly-tapered interior wherein the top entrance inner circumference is smaller than the interior circumference and said bowl is provided therein with an inclined inner trough and a vertical inner trough opposed to the inclined inner trough both are extending downwardly, thereby forming a tunnel having an outlet and providing a vertical passageway penetrating into the chamber interior to minimize visibility. Each of the inner surfaces of the troughs is covered with a coating that improves the sliding of excrement. The inclined trough has a bottom end centered vertically to a central point of the top entrance of the bowl;
According to another embodiment of the present invention, said top opening is defined by a squat pan having an oblong interior, and the squat pan is provided therein with an inclined inner trough and a vertical inner trough opposed to the inclined inner trough both are extending downwardly, thereby forming a tunnel having an outlet and providing a vertical passageway penetrating into the chamber interior to minimize visibility. Each of the inner surfaces of the troughs is covered with a coating that improves the sliding of the excrement. The inclined trough also has a bottom end centered vertically to a central point of the top entrance of the squat pan;
The device comprises a storing porous plate mounted crossing the whole width and whole length of an upper half of the interior of the chamber wherein the upper part of the plate features to have a protrusion in the form of an equilateral-triangular base pyramid topped vertically under the centre of the outlet of the top opening and the lower side of equilateral-triangular base intersected perpendicularly to the central line of the plate, and the plate further slopes downwardly and then extends horizontally away from the top opening in the form of a series of corrugations whereby the excrement moves down the pyramid and the slope and then across the porous plate by gravity, whereas the liquid urine falls down into the urine storing region of the chamber through perforations in the porous plate;
The device further comprises two solid excrement storing regions namely a front storing region located under the top opening and a rear storing region located away from said top opening, each region being separable by a vertical baffle on top of said corrugated plate, whereby the solid excrement is stored firstly at the front storing region and secondly at the rear storing region;
The device still further comprises a means of dehydrating the solid excrement layers by ventilating the chamber interior by means of a ventilation system located at the top ceiling region of front storing region which draws air in through the end wall of rear storing region, down through the porous plate into the urine storing region and backup through the porous plate before exiting out through the ventilation system;
The device can also comprise a means of providing an indirect heat source inside the chamber wherein heat penetrates solid excrement without touching;
The invention will now be described in detail, by way of example, with reference to the drawings.

### BRIEF DESCRIPTION OF THE DRAWINGS

Fig. 1 is a perspective view of a bowl to be used in an embodiment of the present invention;
Fig. 2 is a perspective view of a squat pan to be used in another embodiment of the present invention;
Fig. 3 is a perspective view of a porous storing plate to be used in an embodiment of the present invention;
Fig. 4 is a cross-sectional view of the embodiment of the present invention used with the bowl of Fig.1

### DETAILED DESCRIPTION OF THE PREFERRED EMBODIMENT

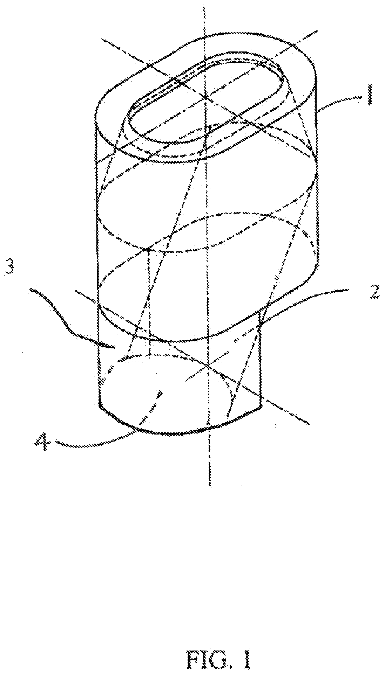

Fig.1 shows a perspective view of a bowl (1) to be used in the present invention. The bowl (1), provided for sitting on to defecate and urinate, includes an upwardly-tapered interior in a way that the top entrance inner circumference is smaller than the interior circumference of the said bowl (1) to avoid the excrement staining on the inner wall thereof. The bowl (1) further includes an inclined inner trough (2) extending inwardly and downwardly and a vertical inner trough (3) opposed to the inclined trough (2), with each of the troughs (2) and (3) having a curved surface forming a vertical passageway having an outlet (4) penetrating into the interior of the chamber (5) to minimize visibility. Each of the inner surfaces of the troughs (2), (3) is covered with a coating that improves the sliding of excrement. The inclined trough (2) has a bottom end centered vertically to the central point of the top entrance of the bowl (1) so that when human body sit on the bowl (1) at normal posture, the anus of the human body is at a vertical position above the central area of the outlet (4), as clearly shown in Fig.1, enabling solid excrement enters the chamber (5) directly through the passageway, whereas urine pushes the remaining solid excrement still left behind on the inclined trough (2) into the chamber (5).

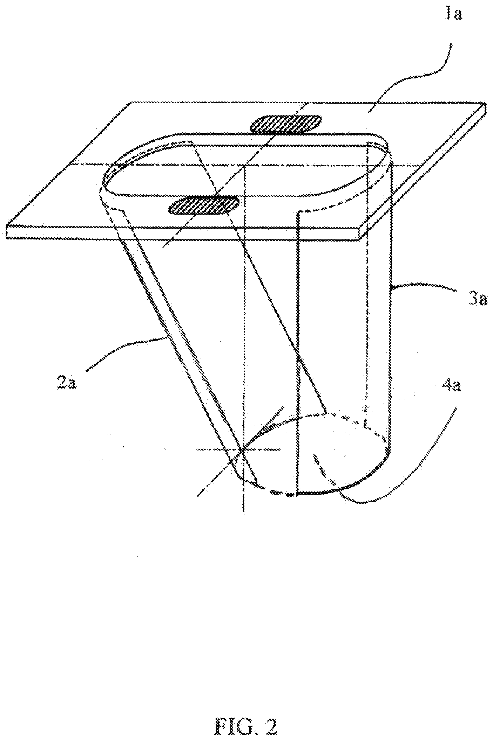

Alternatively, a squat pan (1a) of Fig.2 is used instead of the bowl (1) of Fig.1. As shown in Fig. 2, the squat pan (1a), provided for squatting across to defecate and urinate, includes an oblong interior. The squat pan (1a) further includes an inclined inner trough (2a) extending inwardly and downwardly and a vertical inner trough (3a) opposed to the inclined trough (2a) forming a vertical passageway having an outlet (4a) penetrating into the interior of the chamber (5) to minimize visibility. Each of the inner surfaces of the troughs (2a), (3a) is covered with a coating that improves the sliding of the excrement. The inclined trough (2a) here also has a bottom end centered vertically to the central point of the top entrance of the squat pan (1a) so that when human body squat across the squat pan (1a) at normal squatting posture, the anus of the human body is at a vertical position above the central area of the outlet (4a) enabling solid excrement enters the chamber (5) directly through the passageway, whereas urine pushes the remaining solid excrement still left behind on the inclined trough (2a) into the chamber (5) as clearly shown in Fig.2. Regardless of the difference between the bowl (1) and the squat pan (1a), their respective inner troughs (2,2a) and (3,3a) form an outlet (4,4a) providing a vertical passageway between them as the top opening of the chamber (5).

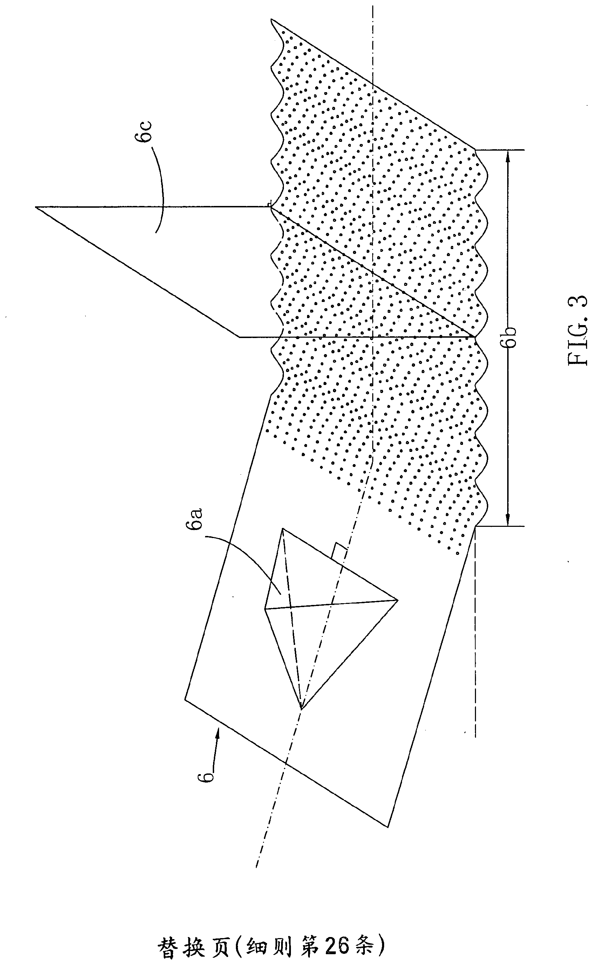

Fig.3 shows a perspective view of a storing porous plate (6) to be used in the present invention. The upper part of the plate (6) features to have a protrusion in the form of an equilateral-triangular base pyramid (6a) wherein the lower side of the equilateral-triangular base of the pyramid (6a) intersects perpendicularly to the central line of the plate (6), and the plate (6) further slopes downwardly and then extends horizontally in the form of a series of corrugations (6b) wherein holes are distributed on the lower surface of the slope and on the surface of the corrugated area (6b) to allow urine falling down and to allow air penetration through the plate whereby a vertical baffle (6c) is fixed on top the corrugated area (6b).

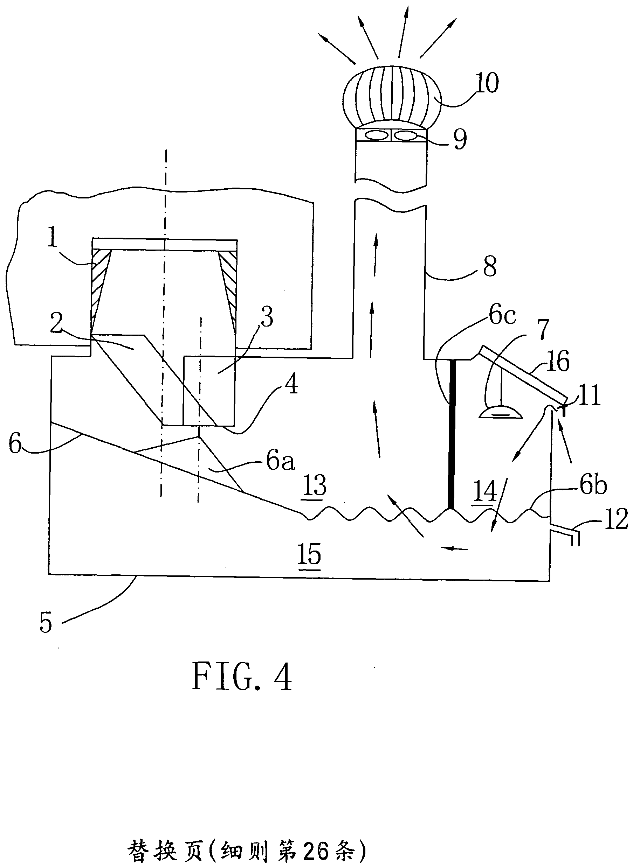

As shown in Fig.4, the chamber (5) having topped with a bowl (1) as per Fig.1 is defined by a first end wall located adjacent to the top opening, a second end wall located away from the top opening, and a pair of side walls (only one is shown) extending between the end walls. The storing porous plate (6) as shown in Fig. 3 is mounted across the whole length and whole width of the upper half of the interior of the chamber (5) wherein the top of the pyramid (6a) is located vertically under the center of the outlet (4) of the top opening and the lower side of the equilateral-triangular base intersects perpendicularly to the central line of the plate (6) whereby the pyramid (6a) provides three slopes to widen the movement of excrement down the main slope of the plate (6) and then across the horizontal corrugated plate (6b) by gravity. The vertical baffle (6c) divides the upper chamber interior into two separated storing regions namely a front storing region (13) and a rear storing region (14), wherein solid excrement is stored firstly at the front storing region (13) and secondly at the rear storing region (14). The urine falls into the urine storing region (15) through holes in the porous plate (6). A set of ventilation system comprising of a ventilating duct (8) topped with an exhaustion fan (9) and a wind turbine (10) locates at the top ceiling region of the front storing region (13) drawing air in through the end wall (11) of rear storing region (14), down through porous plate (6) into urine storing region (15) and backup through the porous plate (6) before exiting out through the ventilating system. An indirect heat source (7) locates at the rear storing region (14) to promote dehydration without touching. Excess liquid urine is drained out of urine storing region (15) through an overflow exit (12) located under plate (6) to avoid flooding of solid excrement layers. Eventually completely dried organic harmless substance is obtained through the manhole cover (16) at the rear storing region (14).

Although embodiments together with structures and functions of present invention have been described in detail, many modifications and variations may be made from the teachings disclosed hereinabove. Therefore, it should be understood by those skilled in the art that any modification and variation equivalent to the scope of present invention should be regarded to fall within the scope of the appended claims.

## Claims

1. A method for treatment of human excrement comprising the steps of: providing a chamber (5) having a top opening through which excrement enters the chamber (5) allowing excrement to form a layer inside chamber (5) by setting up a plate (6) across the whole width and length of the interior of chamber (5) and dehydrating solid excrement by ventilating the chamber (5) interior by means of a ventilation system,
**characterised in that** the plate (6) is a porous plate and an upper part of plate (6) includes a protrusion in the form of an equilateral-triangular base pyramid (6a) topped vertically under the center of an outlet (4,4a) of the top opening and lower side of the equilateral-triangular base of the pyramid is intersected perpendicularly to a central line of the plate (6),
and the plate (6) further slopes downwardly and then horizontally away from the top opening in the form of a series of corrugations (6b), whereby excrement moves down the pyramid (6a) and the slope and across the porous plate by gravity; the method further comprising the steps of:
allowing liquid urine to fall down into a urine storing region (15) through perforations in the porous plate;
setting up two solid excrement storing regions namely a front storing region (13) located under the top opening and a rear storing region (14) located away from the top opening,
storing solid excrement firstly at front storing region (13) and secondly at rear storing region (14);
separating the regions by mounting a vertical baffle (6c) on top of said corrugated plate (6b); and
dehydrating solid excrement by means of said ventilation system being located at the top ceiling region of the front storing region
(13) which draws air in through an end wall (11) of the rear storing region (14), down through the porous plate (6) into the urine storing region (15) and back up through the porous plate (6) before exiting out through the ventilation system.

2. A method for treatment of human excrement as claimed in claim 1, wherein the method further comprises the step of providing an indirect heat source (7) inside the chamber (5).

3. A device for treatment of human excrement comprising a chamber (5) having a top opening through which excrement enters the chamber (5); a storing plate (6) mounted across the whole width and length of the interior of chamber (5), **characterised in that** wherein the plate (6) is a porous plate and an upper part of plate (6) includes a protrusion in the form of an equilateral-triangular base pyramid (6a) topped vertically under the center of an outlet (4,4a) of the top opening and the lower side of the equilateral-triangular base of the pyramid is intersected perpendicularly to a central line of the plate (6), and **in that** the plate (6) further slopes downwardly and then extends horizontally away from the top opening in the form of a series of corrugations (6b) whereby excrement moves down the protrusion (6a) and the slope and across the plate by gravity; wherein liquid urine is allowed to fall down into a urine storing region (15) of chamber through perforations in the porous plate (6); wherein the chamber further comprises two solid excrement storing regions namely a front storing region(13) located under the top opening and a rear storing region(14) located away from the top opening, each region being separable by a vertical baffle (6c) on top of said corrugated plate; wherein solid excrement is stored firstly at the front storing region (13) and secondly at the rear storing region (14); the device further comprises a means of dehydrating solid excrement layers by ventilating the chamber interior by means of a ventilation system located at a top ceiling region of the front storing region (13) which draws air in through an end wall (11) at the rear storing region (14), down through the porous plate (6) into urine storing region (15) and back up through the porous plate (6) before exiting out through the ventilation system.

4. A device for treatment of human excrement as claimed in claim 3, wherein said top opening is defined by a bowl (1) having an upwardly-tapered interior and wherein top entrance inner circumference is smaller than interior circumference of said bowl (1), wherein said bowl (1) is provided therein with an inclined inner trough (2) and a vertical inner trough (3) opposed to said inclined inner trough (2), thereby providing a passageway between said troughs (2, 3) having an outlet (4) as the top opening of said chamber (5).

5. A device for treatment of human excrement as claimed in claim 3, wherein said top opening is defined by a squat pan (1a) having an oblong interior and squat pan (1a) is provided therein with an inclined inner trough (2a) and a vertical inner trough (3a) opposed to said inclined inner trough (2a), thereby providing a passageway between said troughs (2a, 3a) having an outlet (4a) as the top opening of said chamber (5).

6. A device for treatment of human excrement as claimed in claim 4 or claim 5, wherein said inclined inner trough (2,2a) has a bottom end centered vertically on a central point of the top entrance of said interior.

7. A device for treatment of human excrement as described in claim 3, wherein the device further comprises an indirect heat source (7) inside the chamber (5).

## Patentansprüche

1. Verfahren zur Verarbeitung menschlicher Exkremente, umfassend die Schritte: Bereitstellen einer Kammer (5), die eine obere Öffnung aufweist, durch welche Exkremente in die Kammer (5) eintreten, wobei ermöglicht wird, dass Exkremente eine Schicht im Inneren der Kammer (5) bilden, indem eine Platte (6) über die gesamte Breite und Länge des Innenraums der Kammer (5) eingerichtet wird, und Entwässern von festen Exkrementen, indem der Innenraum der Kammer (5) mittels eines Belüftungssystems belüftet wird,
**dadurch gekennzeichnet, dass** die Platte (6) eine poröse Platte ist und ein oberer Teil der Platte (6) einen Vorsprung in der Form einer Pyramide (6a) mit gleichseitiger dreieckiger Basis umfasst,
die vertikal unter der Mitte eines Auslasses (4,4a) der oberen Öffnung überragt, und eine untere Seite der gleichseitigen dreieckigen Basis der Pyramide senkrecht zu einer zentralen Linie der Platte (6) geschnitten wird,
und die Platte (6) ferner nach unten und danach horizontal weg von der oberen Öffnung in der Form einer Reihe Riffelungen (6b) geneigt ist, wodurch sich Exkremente die Pyramide (6a) und die Neigung und über die poröse Platte durch Schwerkraft herunterbewegen; wobei das Verfahren ferner folgende Schritte umfasst:
Ermöglichen, dass flüssiger Urin in einen Urinspeicherbereich (15) durch Bohrungen in der porösen Platte herabfällt;
Einrichten von zwei Speicherbereichen für feste Exkremente, und zwar ein vorderer Speicherbereich (13), der sich unter der oberen Öffnung befindet, und ein hinterer Speicherbereich (14), der sich entfernt von der oberen Öffnung befindet,
Speichern von festen Exkrementen erstens am vorderen Speicherbereich (13) und zweitens am hinteren Speicherbereich (14);
Trennen der Bereiche, indem eine vertikale Trennwand (6c) oben auf der geriffelten Platte (6b) montiert wird; und
Entwässern von festen Exkrementen mittels
des sich im oberen Deckenbereich des vorderen Speicherbereichs
(13) befindlichen Belüftungssystems, das Luft durch eine Endwand (11) des hinteren Speicherbereichs (14), herab durch die poröse Platte (6) in den Urinspeicherbereich (15) und zurück hinauf durch die poröse Platte (6) vor dem Verlassen durch das Belüftungssystem einzieht.

2. Verfahren zur Verarbeitung von menschlichen Exkrementen nach Anspruch 1, wobei das Verfahren ferner den Schritt des Bereitstellens einer indirekten Wärmequelle (7) im Inneren der Kammer (5) umfasst.

3. Vorrichtung zur Verarbeitung von menschlichen Exkrementen, umfassend eine Kammer (5), die eine obere Öffnung aufweist, durch welche Exkremente in die Kammer (5) eintreten; eine Speicherplatte (6), die über die gesamte Breite und Länge des Innenraums der Kammer (5) montiert ist,
**dadurch gekennzeichnet, dass** wobei die Platte (6) eine poröse Platte ist und ein oberer Teil der Platte (6) einen Vorsprung in der Form einer Pyramide (6a) mit gleichseitiger dreieckiger Basis umfasst,
die vertikal unter der Mitte eines Auslasses (4,4a) der oberen Öffnung überragt, und die untere Seite der gleichseitigen dreieckigen Basis der Pyramide senkrecht zu einer zentralen Linie der Platte (6) geschnitten wird,
und dass die Platte (6) ferner nach unten geneigt ist und sich danach horizontal weg von der oberen Öffnung in der Form einer Reihe von Riffelungen (6b) erstreckt, wodurch sich Exkremente den Vorsprung (6a) und die Neigung und über die Platte durch Schwerkraft herunterbewegen; wobei ermöglicht wird, dass flüssiger Urin in einen Urinspeicherbereich (15) der Kammer durch Bohrungen in der porösen Platte (6) herabfällt; wobei die Kammer ferner zwei Speicherbereiche für feste Exkremente umfasst, und zwar einen vorderen Speicherbereich (13), der sich unter der oberen Öffnung befindet, und einen hinteren Speicherbereich (14), der sich entfernt von der oberen Öffnung befindet, wobei jeder Bereich durch eine vertikale Trennwand (6c) oben auf der geriffelten Platte trennbar ist; wobei feste Exkremente erstens am vorderen Speicherbereich (13) und zweitens am hinteren Speicherbereich (14) gespeichert werden; wobei die Vorrichtung ferner eine Einrichtung zum Entwässern von Schichten von festen Exkrementen durch Belüften der Kammerinnenraums mittels eines sich an einem oberen Deckenbereich des vorderen Speicherbereichs (13) befindlichen Belüftungssystems, das Luft durch eine Endwand (11) am hinteren Speicherbereich (14), herab durch die poröse Platte (6) in den Urinspeicherbereich (15) und zurück hinauf durch die poröse Platte (6) vor dem Verlassen durch das Belüftungssystem einzieht, umfasst.

4. Vorrichtung zur Verarbeitung von menschlichen Exkrementen nach Anspruch 3, wobei die obere Öffnung
durch eine Schüssel (1) definiert ist, die einen sich nach oben verjüngenden Innenraum aufweist, und wobei der Innenumfang des oberen Eingangs kleiner ist als der Innenumfang der Schüssel (1), wobei die Schüssel (1) darin mit einer geneigten inneren Mulde (2) und einer der geneigten inneren Mulde (2) gegenüberliegenden vertikalen inneren Mulde (3) versehen ist, wodurch ein Durchgang zwischen den Mulden (2, 3) bereitgestellt wird, der einen Auslass (4) als die obere Öffnung der Kammer (5) aufweist.

5. Vorrichtung zur Verarbeitung von menschlichen Exkrementen nach Anspruch 3, wobei die obere Öffnung
durch eine Hocktoilette (1a) definiert ist, die einen länglichen Innenraum aufweist, und die Hocktoilette (1a) darin mit einer geneigten inneren Mulde (2a) und einer der geneigten inneren Mulde (2a) gegenüberliegenden vertikalen inneren Mulde (3a) versehen ist, wodurch ein Durchgang zwischen den Mulden (2a, 3a) bereitgestellt wird, der einen Auslass (4a) als die obere Öffnung der Kammer (5) aufweist.

6. Vorrichtung zur Verarbeitung von menschlichen Exkrementen nach Anspruch 4 oder Anspruch 5, wobei die geneigte innere Mulde (2,2a) ein unteres Ende aufweist, das vertikal an einem Mittelpunkt des oberen Eingangs des Innenraums zentriert ist.

7. Vorrichtung zur Behandlung von menschlichen Exkrementen gemäß Anspruch 3, wobei die Vorrichtung ferner eine indirekte Wärmequelle (7) im Inneren der Kammer (5) umfasst.

## Revendications

1. Méthode de traitement d'excrément humain, comprenant les étapes suivantes :
fourniture d'une chambre (5) comprenant une ouverture supérieure par laquelle l'excrément est introduit dans la chambre (5), en permettant la formation, par l'excrément, d'une couche à l'intérieur de la chambre (5) par l'installation d'une plaque (6) à travers l'intégralité de la largeur et de la longueur de l'intérieur de la chambre (5), et la déshydratation de l'excrément solide par la ventilation de l'intérieur de la chambre (5) par le biais d'un système de ventilation,
**caractérisée en ce que** la plaque (6) est une plaque poreuse, et une partie supérieure de la plaque (6) comprend une saillie sous forme d'une pyramide à base triangulaire équilatérale (6a) surmontée verticalement sous le centre d'un orifice de sortie (4,4a) de l'ouverture supérieure, et le côté inférieur de la base triangulaire équilatérale de la pyramide croisant perpendiculairement un axe central de la plaque (6),
et la plaque (6) étant, en outre, inclinée vers le bas puis horizontalement dans le sens opposé à l'ouverture supérieure sous forme d'une série d'ondulations (6b), l'excrément descendant alors le long de la pyramide (6a) et de l'inclinaison, et se déplaçant à travers la plaque poreuse, par gravité ;
la méthode comprenant en outre les étapes suivantes :
déversement de l'urine liquide dans une zone de stockage de l'urine (15) à travers des perforations dans la plaque poreuse ;
mise en place de deux zones de stockage d'excréments solides, à savoir une zone de stockage antérieure (13) située sous l'ouverture supérieure, et une zone de stockage postérieure (14), éloignée de l'ouverture supérieure,
stockage d'excréments solides premièrement dans la zone de stockage antérieure (13), et deuxièmement dans la zone de stockage postérieure (14) ;
séparation des zones par l'installation d'une chicane verticale (6c) sur le dessus de ladite plaque ondulée (6b) ; et
déshydratation de l'excrément solide par le biais dudit système de ventilation situé dans la zone du plafond supérieur de la zone de stockage antérieure (13), qui introduit de l'air à travers une paroi d'extrémité (11) de la zone de stockage postérieure (14), traversant ensuite la plaque poreuse (6) dans la zone de stockage de l'urine (15), et remontant ensuite la plaque poreuse (6) avant d'être refoulé à travers le système de ventilation.

2. Méthode de traitement d'excrément humain selon la revendication 1, la méthode comprenant en outre l'étape de fourniture d'une source de chaleur indirecte (7) à l'intérieur de la chambre (5).

3. Dispositif pour le traitement d'excrément humain comprenant une chambre (5) possédant une ouverture supérieure par laquelle l'excrément est introduit dans la chambre (5) ; une plaque de stockage (6) montée à travers l'intégralité de la largeur et de la longueur de l'intérieur de la chambre (5),
**caractérisée en ce que** la plaque (6) est une plaque poreuse, et une partie supérieure de la plaque (6) comprend une saillie sous forme d'une pyramide à base triangulaire équilatérale (6a) surmontée verticalement sous le centre d'un orifice de sortie (4,4a) de l'ouverture supérieure, et le côté inférieur de la base triangulaire équilatérale de la pyramide croisant perpendiculairement un axe central de la plaque (6), et
et **en ce que** la plaque (6) est, en outre, inclinée vers le bas puis horizontalement dans le sens opposé à l'ouverture supérieure sous forme d'une série d'ondulations (6b), l'excrément descendant alors le long de la pyramide (6a) et de l'inclinaison, et se déplaçant à travers la plaque, par gravité ; de l'urine liquide étant déversée dans une zone de stockage d'urine (15) de la chambre à travers des perforations dans la plaque poreuse (6) ; la chambre comprenant en outre deux zones de stockage d'excréments solides, à savoir une zone de stockage antérieure (13), située sous l'ouverture supérieure, et une zone de stockage postérieure (14), éloignée de l'ouverture supérieure, chaque zone pouvant être séparée par une chicane verticale (6c) sur le dessus de ladite plaque ondulée ; l'excrément solide étant stocké premièrement dans la zone de stockage antérieure (13), et deuxièmement dans la zone de stockage postérieure (14) ; le dispositif comprenant en outre un dispositif de déshydratation des couches d'excrément solide par la ventilation de l'intérieur de la chambre par le biais d'un système de ventilation situé dans la zone du plafond supérieur de la zone de stockage antérieure (13), qui introduit de l'air à travers une paroi d'extrémité (11) de la zone de stockage postérieure (14), traversant ensuite la plaque poreuse (6) dans la zone de stockage de l'urine (15), et remontant ensuite la plaque poreuse (6) avant d'être refoulé à travers le système de ventilation.

4. Dispositif pour le traitement d'excrément humain selon la revendication 3, ladite ouverture supérieure étant définie par une cuvette (1) dont l'intérieur est effilé vers le haut, et la circonférence interne de l'entrée supérieure étant inférieure à la circonférence intérieure de ladite cuvette (1), ladite cuvette (1) étant pourvue dedans d'une cuve interne inclinée (2) et d'une cuve interne verticale (3) opposée à ladite cuve interne inclinée (2), en formant ainsi une voie de passage entre lesdites cuves (2, 3) dont la sortie (4) est l'ouverture supérieure de ladite chambre (5).

5. Dispositif pour le traitement d'excrément humain selon la revendication 3, ladite ouverture supérieure étant définie par un bac ayant une forme ramassée (1a), présentant un intérieur de forme allongée, dans laquelle se trouve un bac de forme ramassée (1a) avec une cuve interne inclinée (2a) et une cuve interne verticale (3a) située face à ladite cuve interne inclinée (2a), en formant ainsi une voie de passage entre lesdites cuves (2a, 3a) dont la sortie (4a) est l'ouverture supérieure de ladite chambre (5).

6. Dispositif pour le traitement d'excrément humain selon la revendication 4 ou la revendication 5, ladite cuve interne inclinée (2, 2a) possédant une extrémité inférieure centrée verticalement sur un point central de l'entrée supérieure dudit intérieur.

7. Dispositif pour le traitement d'excrément humain selon la revendication 3, le dispositif comprenant en outre une source de chaleur indirecte (7) à l'intérieur de la chambre (5).
